# EUROPEAN PATENT APPLICATION

(11) **EP 4 806 936 A1**
(43) Date of publication of application: **16.09.2026**
(21) Application number: 26163192.3
(22) Date of filing: 09.03.2026
(51) Int. Cl.: C08G 63/16, C08G 63/181, C08G 63/183, C08G 63/78, C08L 67/02, C08G 63/20

(54) **ALIPHATIC POLYESTER, POLYESTER COMPOSITION CONTAINING SAME, AND USE THEREOF**

(30) Priority: 10.03.2025 CN 202510276890
(71) Applicant: KINGFA SCI. & TECH. CO., LTD., Guangzhou, Guangdong 510663 (CN); Zhuhai Kingfa Biomaterial Co., Ltd., Zhuhai, Guangdong 519050 (CN); Liaoning Kingfa Biomaterial Co., Ltd., Panjin City, Liaoning Province 124000 (CN)
(72) Inventor: Lu, Changli, Guangzhou, 510663 (CN); Chen, Pingxu, Guangzhou, 510663 (CN); Ye, Nanbiao, Guangzhou, 510663 (CN); Zeng, Xiangbin, Guangzhou, 510663 (CN); Fu, Xuejun, Guangzhou, 510663 (CN); Zhang, Jialong, Guangzhou, 510663 (CN); Guo, Zhilong, Guangzhou, 510663 (CN); Wang, Chaojun, Guangzhou, 510663 (CN); Ouyang, Chunping, Guangzhou, 510663 (CN); Zhang, Erjie, Guangzhou, 510663 (CN); Ye, Jiaqi, Guangzhou, 510663 (CN)
(74) Representative: Petraz, Gilberto Luigi

(57) **Abstract**

The present invention provides an aliphatic polyester, a polyester composition containing the same, and use thereof. The aliphatic polyester includes a dicarboxylic acid residue, a diol residue, and a branching agent residue; the dicarboxylic acid residue includes the following residues: a1) based on a total molar percentage content of a1) and a2) as 100 mol%, 71-89 mol% of a succinic acid residue; and a2) based on the total molar percentage content of a1) and a2) as 100 mol%, 11-29 mol% of a sebacic acid residue; the diol residue is selected from a 1,4-butanediol residue with a molar content at least equal to that of the dicarboxylic acid residue; and based on a total mass of the aliphatic polyester as 100 wt%, a mass percentage content of the branching agent residue is 0.09-0.22 wt%. The aliphatic polyester solves the problem of low heat sealing strength of aliphatic polyesters.

## Description

### TECHNICAL FIELD

The present invention belongs to the technical field of polyester materials, and particularly relates to an aliphatic polyester, a polyester composition containing the same, and use thereof.

### BACKGROUND

Biodegradable polyesters obtained from dicarboxylic acids and diols, in addition to possessing biodegradability, also possess good extensibility and certain mechanical properties, with performance similar to that of low-density polyethylene (LDPE) and linear low-density polyethylene (LLDPE), thus having been widely used in the field of packaging bags such as shopping bags, courier bags, and fruit and vegetable bags.

For the packaging bags, in order to meet use demands, heat sealing treatment usually needs to be performed during processing, and the quality of heat sealing directly affects whether the packaging bags are prone to edge bursting or bottom puncturing during use. Heat sealing strength is a key indicator for evaluating the quality of heat sealing, and in addition to being affected by a heat sealing process (involving a heat sealing time, a temperature, and a pressure), the heat sealing strength is also closely related to structures of materials themselves. For aliphatic-aromatic polyesters, such as poly(butylene adipate-co-terephthalate) (PBAT), although they possess relatively good mechanical properties, due to the presence of aromatic dicarboxylate chain segments, on the one hand, deteriorated degradability of polyester materials are caused; and on the other hand, the polyesters with higher melting points are caused, and the higher melting points result in the need to adopt a higher heat sealing temperature (usually above 135°C) during heat sealing. However, on the one hand, the excessively high heat sealing temperature leads to accelerated diffusion of molecular chains of the materials and limited entanglement of the molecular chains between interfaces within a relatively short heat sealing time, thereby reducing the heat sealing strength; and on the other hand, due to the excessively high temperature, the materials undergo thermal degradation to a certain degree during heat sealing, thereby further reducing the heat sealing strength.

For aliphatic polyesters, such as poly(butylene succinate-co-sebacate), although possessing good degradability and lacking aromatic structures, they have low melting points, and do not need to adopt a high heat sealing temperature, thereby avoiding the impact of the heat sealing temperature on the heat sealing strength. However, the aliphatic polyesters themselves have relatively low heat sealing strength, which affects the performance and production efficiency of the packaging bags.

Therefore, the development of an aliphatic polyester with high heat sealing strength is an urgent problem to be solved in the field.

### SUMMARY

In view of the shortcomings of the prior art, an objective of the present invention is to provide an aliphatic polyester, a polyester composition containing the same, and use thereof. The aliphatic polyester solves the problems that packaging bags are prone to edge bursting or bottom puncturing due to low heat sealing strength of aliphatic polyesters in the prior art.

To achieve the objective, the present invention adopts the following technical solutions.

In a first aspect, the present invention provides an aliphatic polyester, where the aliphatic polyester includes a dicarboxylic acid residue, a diol residue, and a branching agent residue; the dicarboxylic acid residue includes the following residues: a1) based on a total molar percentage content of a1) and a2) as 100 mol%, 71-89 mol% of a succinic acid residue; and a2) based on the total molar percentage content of a1) and a2) as 100 mol%, 11-29 mol% of a sebacic acid residue; the diol residue is selected from a 1,4-butanediol residue with a molar content at least equal to that of the dicarboxylic acid residue; the branching agent residue is derived from a branching agent with a degree of functionality ≥ 3; and based on a total mass of the aliphatic polyester as 100 wt%, a mass percentage content of the branching agent residue is 0.09-0.22 wt%.

In the present invention, by controlling the molar contents of the succinic acid residue and the sebacic acid residue within specific ranges, it is ensured that the aliphatic polyester has mechanical properties, heat resistance, and degradability, and meanwhile, a melting point (the melting point below 100°C) of the aliphatic polyester can be decreased to decrease a heat sealing temperature, thereby facilitating the improvement of heat sealing strength; by including the branching agent residue and controlling the content of the branching agent residue within a specific range, the aliphatic polyester with a specific branched structure can be formed, thereby further improving the heat sealing strength of the aliphatic polyester; and as a result, a packaging bag including the aliphatic polyester has high heat sealing strength, thereby avoiding the problem of edge bursting or bottom puncturing of the packaging bag and improving production efficiency.

It should be noted that the "residue" refers to any organic structure of a relevant monomer introduced into a polymer molecular chain via a polycondensation reaction, that is, the organic structure derived from the corresponding monomer; and for example, the dicarboxylic acid residue refers to a structure derived from a dicarboxylic acid monomer in the aliphatic polyester.

In the present invention, succinic acid and/or a succinic acid derivative is introduced into a polyester molecular chain via a polymerization reaction to form the succinic acid residue; sebacic acid and/or a sebacic acid derivative is introduced into the polyester molecular chain via a polymerization reaction to form the sebacic acid residue; a too low content of the succinic acid residue or a too high content of the sebacic acid residue results in a low crystallization speed, low strength, and poor heat resistance; and a too high content of the succinic acid residue or a too low content of the sebacic acid residue results in a high melting point, a high heat sealing temperature, and poor degradability.

In the present invention, the succinic acid derivative includes an alkyl succinate; exemplarily, the alkyl succinate may be at least one of dimethyl succinate, diethyl succinate, di-n-propyl succinate, diisopropyl succinate, di-n-butyl succinate, diisobutyl succinate, di-tert-butyl succinate, di-n-pentyl succinate, diisopentyl succinate, and di-n-hexyl succinate; and the alkyl succinate may be an alkyl ester formed from succinic acid or an alkyl ester formed from succinic anhydride, and dimethyl succinate formed from succinic anhydride is preferably used.

In the present invention, the sebacic acid derivative includes an alkyl sebacate; exemplarily, the alkyl sebacate may be at least one of dimethyl sebacate, diethyl sebacate, di-n-propyl sebacate, diisopropyl sebacate, di-n-butyl sebacate, diisobutyl sebacate, di-tert-butyl sebacate, di-n-pentyl sebacate, diisopentyl sebacate, and di-n-hexyl sebacate; and the alkyl sebacate may be an alkyl ester formed from sebacic acid or an alkyl ester formed from sebacic anhydride.

Preferably, the dicarboxylic acid residue includes the following residues: a1), based on the total molar percentage content of a1) and a2) as 100 mol%, 74-83 mol% of the succinic acid residue; and a2), based on the total molar percentage content of a1) and a2) as 100 mol%, 17-26 mol% of the sebacic acid residue; more preferably, a1), based on the total molar percentage content of a1) and a2) as 100 mol%, 74-80 mol% of the succinic acid residue; and a2), based on the total molar percentage content of a1) and a2) as 100 mol%, 20-26 mol% of the sebacic acid residue.

In the present invention, the mass percentage content of the branching agent residue is 0.09-0.22 wt%, and for example, may be 0.09 wt%, 0.092 wt%, 0.094 wt%, 0.098 wt%, 0.1 wt%, 0.102 wt%, 0.104 wt%, 0.106 wt%, 0.108 wt%, 0.11 wt%, 0.112 wt%, 0.114 wt%, 0.116 wt%, 0.118 wt%, 0.12 wt%, 0.122 wt%, 0.124 wt%, 0.126 wt%, 0.128 wt%, 0.13 wt%, 0.132 wt%, 0.134 wt%, 0.136 wt%, 0.138 wt%, 0.14 wt%, 0.142 wt%, 0.144 wt%, 0.146 wt%, 0.148 wt%, 0.15 wt%, 0.152 wt%, 0.154 wt%, 0.156 wt%, 0.158 wt%, 0.16 wt%, 0.162 wt%, 0.164 wt%, 0.166 wt%, 0.168 wt%, 0.17 wt%, 0.172 wt%, 0.175 wt%, 0.178 wt%, 0.18 wt%, 0.182 wt%, 0.185 wt%, 0.188 wt%, 0.19 wt%, 0.192 wt%, 0.195 wt%, 0.198 wt%, 0.2 wt%, 0.202 wt%, 0.205 wt%, 0.208 wt%, 0.21 wt%, 0.212 wt%, 0.215 wt%, 0.218 wt%, 0.22 wt%, or any range between the above numerical values; and preferably, the mass of the branching agent residue is 0.11-0.17 wt%.

In the aliphatic polyester of the present invention, the content of the branching agent residue may be tested by a liquid chromatography-mass spectrometry (LC-MS) instrument.

In the present invention, the addition of the multifunctional branching agent enables the structure of the aliphatic polyester to be transformed from a linear polyester to a branched polyester; as the addition amount of the branching agent increases, molecules with long and short branches in molecular chain segments are increased, and interfaces are more prone to undergoing entanglement during heat sealing, thereby improving the heat sealing strength; however, when the addition amount of the branching agent is excessively high, the crystallization speed of the polyester is greatly increased, and the crystallinity is increased; and after the crystallinity is increased, more energy is required during heat sealing to achieve melting of the material and complete heat sealing, and thus, the excessive amount of the branching agent, on the contrary, leads to a decrease in heat sealing strength.

Preferably, a molecular structure of the branching agent includes at least one of a hydroxyl group, a carboxyl group, or an acid anhydride.

Preferably, the branching agent includes at least one of a polyol, a polyacid, a polyol acid, or a polyacid anhydride, further preferably a polyol.

Preferably, the polyol includes at least one of trimethylolpropane, trimethylolethane, pentaerythritol, polyether triol, or glycerol.

Preferably, the polyacid includes at least one of 1,3,5-benzenetricarboxylic acid, 1,2,4-benzenetricarboxylic acid, or 1,2,4,5-benzenetetracarboxylic acid.

Preferably, the polyol acid includes at least one of tartaric acid, citric acid, or malic acid.

In the present invention, the polyol acid refers to a molecular structure containing at least one hydroxyl group and at least one carboxyl group.

Preferably, the polyacid anhydride includes 1,2,4-benzenetricarboxylic anhydride and/or pyromellitic dianhydride.

Preferably, a molecular weight distribution coefficient of the aliphatic polyester is 1.3-2.8, for example, may be 1.3, 1.4, 1.5, 1.52, 1.54, 1.56, 1.58, 1.6, 1.62, 1.64, 1.66, 1.68, 1.7, 1.72, 1.74, 1.76, 1.78, 1.8, 1.82, 1.84, 1.86, 1.88, 1.9, 1.92, 1.94, 1.96, 1.98, 2, 2.1, 2.15, 2.2, 2.25, 2.3, 2.35, 2.4, 2.45, 2.5, 2.6, 2.7, 2.8, or any range between the above numerical values, and is further preferably 1.5-2.5.

In the present invention, the molecular weight distribution coefficient is a ratio of a weight-average molecular weight (Mw) to a number-average molecular weight (Mn); and Mw and Mn may be tested by a gel permeation chromatograph, and then the coefficient is calculated. The branching agent and its content affect the molecular weight distribution coefficient, and as the content of the branching agent increases, the molecular weight distribution coefficient of the polyester widens; and in addition, an alcohol-to-acid ratio and polymerization conditions (such as temperature, time, pressure, etc.) also affect the molecular weight distribution coefficient.

Preferably, under conditions of 190°C and 2.16 kg, a melt flow rate of the aliphatic polyester is 1.2-10 g/10 min, and for example, may be 1.2 g/10 min, 1.4 g/10 min, 1.6 g/10 min, 1.8 g/10 min, 2 g/10 min, 2.2 g/10 min, 2.4 g/10 min, 2.6 g/10 min, 2.8 g/10 min, 3 g/10 min, 3.2 g/10 min, 3.4 g/10 min, 3.6 g/10 min, 3.8 g/10 min, 4 g/10 min, 4.2 g/10 min, 4.4 g/10 min, 4.6 g/10 min, 4.8 g/10 min, 5 g/10 min, 5.2 g/10 min, 5.4 g/10 min, 5.6 g/10 min, 5.8 g/10 min, 6 g/10 min, 6.2 g/10 min, 6.5 g/10 min, 6.8 g/10 min, 7 g/10 min, 7.2 g/10 min, 7.5 g/10 min, 7.8 g/10 min, 8 g/10 min, 8.2 g/10 min, 8.5 g/10 min, 8.8 g/10 min, 9 g/10 min, 9.2 g/10 min, 9.5 g/10 min, 9.8 g/10 min, 10 g/10 min, or any range between the above numerical values; and further preferably, the melt flow rate is 2.2-6 g/10 min.

In the present invention, the melt flow rate is tested according to the standard ISO 1133-2-2012 under test conditions of 190°C and 2.16 kg.

In the present invention, considering hydrolysis resistance, aging resistance, biological disintegrability, and cost, a carboxyl content of the aliphatic polyester is preferably < 50 mol/t, further preferably < 30 mol/t, and particularly preferably < 15 mol/t.

In the present invention, the carboxyl content is tested according to GB/T 32366-2015; the carboxyl content may be controlled by changing conditions such as an alcohol-to-acid ratio, a polymerization temperature, and a polymerization time; and in addition, the carboxyl content may also be controlled by inhibiting the types or quantities of impurities in raw materials, such as nitrogen compounds and metal ions.

In the present invention, a method for preparing the aliphatic polyester is not particularly limited, and any method capable of preparing the aliphatic polyester with a specific branched structure in the present invention may be used; and preferably, the method for preparing the aliphatic polyester includes the following steps:
(1) allowing a dicarboxylic acid, a diol, and a branching agent to carry out a reaction to obtain an esterification product;
(2) allowing the esterification product obtained in the step (1) to carry out a pre-polymerization reaction to obtain a pre-polymerization product; and
(3) allowing the pre-polymerization product obtained in the step (2) to carry out a polycondensation reaction to obtain the aliphatic polyester.

In the present invention, the dicarboxylic acid may be used alone, and may also be a mixture of at least two kinds.

In the present invention, a molar ratio of the diol to the dicarboxylic acid is (1.2-3):1, for example, may be 1.2:1, 1.5:1, 1.8:1, 2:1, 2.2:1, 2.5:1, 2.8:1, 3:1, or a range between any of the above numerical values, and is more preferably (1.4-2):1.

In the present invention, the reaction in the step (1) includes an esterification reaction and/or a transesterification reaction; the reaction is carried out at a temperature of 150-220°C and a pressure of 0.7-1.2 bar for a time of 2-7 h; and further preferably, the reaction is carried out at a temperature of 158-215°C and a pressure of 0.75-1.15 bar for a time of 2.5-6 h.

In the present invention, the step (1) may be carried out in a mixing device, where the dicarboxylic acid, the diol, and the branching agent are mixed to obtain a reaction mixture, and then heated to carry out the reaction.

In the present invention, a carboxyl content of the esterification product in the step (1) is ≤ 350 mol/t.

In the present invention, after the reaction in the step (1), the method further includes a step of removing an excessive amount of the diol by distillation, the removed diol may be purified by distillation to reuse as a raw material, and a purity of the purified diol is ≥ 95%.

In the present invention, the pre-polymerization reaction in the step (2) is carried out at a temperature of 230-260°C and a pressure of 0.3-0.8 bar for a time of 70-200 min; and further preferably, the reaction is carried out at a temperature of 235-245°C and a pressure of 0.4-0.75 bar for a time of 78-130 min.

In the present invention, the step (2) may be carried out in a pre-polymerization reactor.

In the present invention, a carboxyl content of the pre-polymerization product in the step (2) is ≤ 80 mol/t.

In the present invention, the polycondensation reaction in the step (3) is carried out at a temperature of 230-260°C and a pressure of 0.2-5 mbar for a time of 35-120 min; and further preferably, the reaction is carried out at a temperature of 238-255°C and a pressure of 0.45-3 mbar for a time of 40-115 min.

In the present invention, the step (3) may be carried out in a finishing device suitable for the polycondensation reaction, such as a rotary reactor, a cage reactor, and a horizontal reactor.

In the present invention, the reaction in the step (2) is carried out in the presence of a catalyst; the catalyst may be a tin compound, an antimony compound, a cobalt compound, a lead compound, a zinc compound, an aluminum compound, or a titanium compound, more preferably the zinc compound, the aluminum compound, or the titanium compound, and most preferably the titanium compound; the titanium compound may be tetrabutyl titanate or tetraisopropyl titanate; and compared with other compounds, the titanium compound has a lower residual content in a product or downstream product and lower toxicity. It is particularly suitable for preparing biodegradable polyesters, which can directly enter the environment in the form of compost bags or mulching films.

In the present invention, based on a total mass of the dicarboxylic acid, the diol, and the branching agent as 100 wt%, a total mass of the catalyst is 0.001-1 wt%.

In the present invention, other auxiliary agents may be added during the reaction in the step (3) according to actual needs; and the other auxiliary agents include, but are not limited to, a catalyst passivator, etc.

The catalyst passivator includes, but is not limited to, a phosphorus compound; the phosphorus compound includes, but is not limited to, one or more of phosphorous acid and phosphoric acid; and based on a mass of the pre-polymerization product as 100 wt%, a mass of the catalyst passivator is 0.001-0.1 wt%, preferably 0.01-0.05 wt%. Exemplarily, when a highly active titanium compound is selected as the catalyst, the catalyst passivator may be added, where a molar ratio of Ti to P is (1.1-1.5):1, particularly preferably (1.1-1.3):1.

In the present invention, after the polycondensation reaction, the method further includes a chain propagation reaction, that is, a product (polycondensation product) obtained from the polycondensation reaction is allowed to react with a chain extender to obtain the aliphatic polyester.

In the present invention, the chain extender includes one or more of an isocyanate, a peroxide, an epoxide, oxazoline, oxazine, caprolactam, or carbodiimide.

In the present invention, the isocyanate may use an aromatic diisocyanate and/or an aliphatic diisocyanate, and the aromatic diisocyanate may be toluene-2,4-diisocyanate, toluene-2,6-diisocyanate, diphenylmethane-2,2'-diisocyanate, diphenylmethane-2,4'-diisocyanate, diphenylmethane-4,4'-diisocyanate, naphthalene-1,5-diisocyanate, or xylene diisocyanate; and particularly preferably, the diphenylmethane-2,2'-diisocyanate, the diphenylmethane-2,4'-diisocyanate, or the diphenylmethane-4,4'-diisocyanate is used. The aromatic diisocyanate may also use a polynuclear aromatic diisocyanate, such as tris(4-isocyanato-phenyl)methane having three rings, which may be formed during a production process of a diisocyanate having one or two rings. The aliphatic diisocyanate may be a linear or branched alkylene diisocyanate containing 2-20 carbon atoms, or a cycloalkylene diisocyanate containing 3-20 carbon atoms; and exemplarily, the aliphatic diisocyanate includes hexamethylene diisocyanate, pentamethylene diisocyanate, isophorone diisocyanate, or methylene bis(4-isocyanatocyclohexane) diisocyanate. The hexamethylene diisocyanate is particularly preferred.

In the present invention, based on a total mass of the polycondensation product, a mass of the isocyanate may be 0.05-2 wt%, particularly preferably 0.1-1.5 wt%.

In the present invention, the peroxide may be one or more of benzoyl peroxide, 1,1-di(tert-butylperoxy)-3,3,5-trimethylcyclohexane, 1,1-di(tert-butylperoxy)methylcyclododecane, n-butyl 4,4-di(butylperoxy)valerate, dicumyl peroxide, tert-butyl peroxybenzoate, dibutyl peroxide, α,α-di(tert-butylperoxy)diisopropylbenzene, 2,5-dimethyl-2,5-di(tert-butylperoxy)hexane, 2,5-dimethyl-2,5-di(tert-butylperoxy)hexan-3-acetylene, or tert-butylperoxy cumene.

In the present invention, based on the total mass of the polycondensation product, a mass of the peroxide may be 0.1-2 wt%, particularly preferably 0.2-1 wt%.

In the present invention, the epoxide may be one or more of diglycidyl ether, hexamethylene diglycidyl ether, sorbitol diglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, ethylene glycol diglycidyl ether, diethylene glycol diglycidyl ether, polyethylene glycol diglycidyl ether, propylene glycol diglycidyl ether, dipropylene glycol diglycidyl ether, polypropylene glycol diglycidyl ether, polybutylene glycol diglycidyl ether, and a copolymer containing an epoxy group based on styrene, acrylate and/or methacrylate.

In the present invention, based on the total mass of the polycondensation product, a mass of the epoxide may be 0.1-2 wt%, preferably 0.2-1 wt%.

In the present invention, the oxazoline may be selected from one or more of 2,2'-bis(2-oxazoline), bis(2-oxazolinyl)methane, 1,2-bis(2-oxazolinyl)ethane, 1,3-bis(2-oxazolinyl)propane, 1,4-bis(2-oxazolinyl)butane, 1,4-bis(2-oxazolinyl)benzene, 1,2-bis(2-oxazolinyl)benzene, or 1,3-bis(2-oxazolinyl)benzene. The oxazine may be selected from one or more of 2,2'-bis(2-dioxazine), bis(2-dioxazinyl)methane, 1,2-bis(2-dioxazinyl)ethane, 1,3-bis(2-dioxazinyl)propane, 1,4-bis(2-dioxazinyl)butane, 1,4-bis(2-dioxazinyl)benzene, 1,2-bis(2-dioxazinyl)benzene, or 1,3-bis(2-dioxazinyl)benzene. The carbodiimide may be selected from one or more of N,N'-di-2,6-diisopropylphenylcarbodiimide, N,N'-di-o-tolylcarbodiimide, N,N'-diphenylcarbodiimide, N,N'-dioctyldecylcarbodiimide, N,N'-di-2,6-dimethylphenylcarbodiimide, N-tolyl-N'-cyclohexylcarbodiimide, N,N'-di-2,6-di-tert-butylphenylcarbodiimide, N,N'-di-2,4,6-triisobutylphenylcarbodiimide, diisopropylcarbodiimide, dimethylcarbodiimide, diisobutylcarbodiimide, dioctylcarbodiimide, tert-butylisopropylcarbodiimide, di-β-naphthylcarbodiimide, or di-tert-butylcarbodiimide.

In the present invention, based on the total mass of the polycondensation product, the mass of the oxazoline, the oxazine, the caprolactam, and the carbodiimide is each independently 0.1-2 wt%, preferably 0.2-1 wt%.

In the present invention, the chain propagation reaction is carried out at a temperature of 170-240°C, and further preferably, the reaction is carried out at a temperature of 180-220°C; and the reaction is carried out under superatmospheric pressure or atmospheric pressure, depending on the system used.

In the present invention, the chain propagation reaction may be carried out in an extruder, a continuous kneader (List reactor), or a static mixer. The extruder may be a single-screw extruder or a twin-screw extruder; and the static mixer may use SMR, SMX, or SMXL components, or a combination thereof. Examples of the List reactor include a single-shaft DISCOTHERM B or twin-shaft CRP or ORP reactor, the chain propagation reaction is preferably carried out in the extruder, and a residence time in the extruder is 2-15 min, more preferably 4-12 min.

In the present invention, the aliphatic polyester may also be prepared by the following method, that is, in step (1), succinic acid and/or a succinic acid derivative and sebacic acid and/or a sebacic acid derivative separately react with 1,4-butanediol to obtain two esterification products, and then the two esterification products are subjected to a subsequent pre-polymerization reaction, a polycondensation reaction, and optionally a chain propagation reaction.

Exemplarily, the preparation method specifically includes the following steps:
step (1-1): allowing succinic acid and/or a succinic acid derivative, 1,4-butanediol, and a branching agent to react under conditions of a temperature of 150-195°C and a pressure of 0.7-1.1 bar for 2-6 h to obtain an esterification product A with a carboxyl content of 320-480 mol/t; and
step (1-2): allowing sebacic acid and/or a sebacic acid derivative to react with 1,4-butanediol under conditions of a temperature of 180-220°C and a pressure of 0.6-1.1 bar for 2-6 h to obtain an esterification product B with a carboxyl content of 240-400 mol/t; and then mixing the esterification product A with the esterification product B, and carrying out a pre-polymerization reaction, a polycondensation reaction, and optionally a chain propagation reaction, where conditions for the pre-polymerization reaction, the polycondensation reaction, and optionally the chain propagation reaction are selected from the same ranges as those of the step (2), the step (3), and the aforementioned chain propagation reaction.

In the present invention, the succinic acid and/or the succinic acid derivative is not particularly limited in source, which may be derived from bio-based succinic acid and/or a succinic acid derivative (that is, the raw material for preparation is a biomass resource), and may also be derived from petroleum-based succinic acid and/or a succinic acid derivative (that is, the raw material for preparation is derived from a petroleum resource).

In a second aspect, the present invention provides a polyester composition, where the polyester composition includes the biodegradable aliphatic polyester described in the first aspect.

Preferably, the polyester composition further includes at least one of a second polymer, a filler, or an auxiliary agent.

Preferably, the second polymer includes at least one of polylactic acid, polycaprolactone, a polyhydroxyalkanoate, an aliphatic polycarbonate, or an aliphatic-aromatic polyester (such as poly(butylene adipate-co-terephthalate), poly(butylene sebacate-co-terephthalate), etc.).

In the present invention, according to the standard ISO 1133-2-2012, under conditions of 190°C and 2.16 kg, a melt flow rate of the second polymer is 0.5-50 g/10 min.

Preferably, the filler includes an inorganic filler and/or an organic filler.

In the present invention, the organic filler includes, but is not limited to, starch and/or cellulose; and the starch may also be used in allosteric and gelatinized forms. The starch may represent a continuous phase or a dispersed phase, and may also be present in a co-continuous form. The inorganic filler includes, but is not limited to, at least one of talc powder, calcium carbonate, and montmorillonite.

In the prior art, in order to improve the heat sealing strength of packaging bags, it is usually achieved by reducing the content of the filler in the polyester composition, and a decrease in filling amount leads to an increase in material cost; whereas the aliphatic polyester of the present invention, when used in the polyester composition filled with the filler, not only improves the heat sealing strength of packaging bags, but also reduces material costs.

In the present invention, the auxiliary agent may be added according to actual needs, including but not limited to a compatibilizer, an antioxidant, a lubricant, a mold release agent, etc.; the compatibilizer includes, but is not limited to, maleic anhydride-grafted polyethylene, a maleic anhydride-grafted polyolefin elastomer, a maleic anhydride-grafted styreneacrylonitrile copolymer, etc.; the antioxidant includes, but is not limited to, any one of antioxidant 1010, antioxidant 1076, antioxidant 168, antioxidant 164, antioxidant DLTP, or antioxidant TPP; the lubricant includes, but is not limited to, at least one of esters (such as polyethylene glycol ester and polyol ester), montanates, ethylene bis-stearamide, or polyethylene wax; and the mold release agent includes, but is not limited to, at least one of inorganic mold release agents (such as talc powder, mica powder, clay, etc.), organic mold release agents (such as fatty acids, paraffin, glycerol, petrolatum, etc.), or polymer mold release agents (such as silicone oil, polyethylene glycol, low-molecular-weight polyethylene, etc.).

As a preferred technical solution of the present invention, in parts by weight, the polyester composition includes 50-70 parts of the biodegradable aliphatic polyester described in the first aspect (for example, may be 50 parts, 55 parts, 60 parts, 65 parts, 70 parts, or a range between any of the above numerical values, preferably 52-68 parts, and further preferably 58-66 parts), 4-20 parts of the second polymer (for example, may be 4 parts, 6 parts, 8 parts, 10 parts, 12 parts, 14 parts, 16 parts, 18 parts, 20 parts, or a range between any of the above numerical values, preferably 4.5-10.5 parts), 15-35 parts of the filler (for example, may be 15 parts, 16 parts, 18 parts, 20 parts, 22 parts, 24 parts, 25 parts, 26 parts, 28 parts, 30 parts, 32 parts, 34 parts, 35 parts, or a range between any of the above numerical values, preferably 17-27 parts), and 0-15 parts of the auxiliary agent (for example, may be 1 part, 2 parts, 4 parts, 6 parts, 8 parts, 10 parts, 12 parts, 14 parts, 15 parts, or a range between any of the above numerical values).

In the present invention, a method for preparing the polyester composition includes: mixing and extruding the biodegradable aliphatic polyester, the second polymer, the filler, and optionally the auxiliary agent to obtain the polyester composition, where an extruder includes a reactive extruder, and the extruder may be a single-screw extruder, a twin-screw extruder, or a multi-screw extruder; and a temperature of the extruding is 140-220°C, and a screw rotation speed during the extruding is 200-500 rpm.

In a third aspect, the present invention provides a packaging bag, where a raw material for preparing the packaging bag includes the aliphatic polyester described in the first aspect or the polyester composition described in the second aspect.

In the present invention, other substances may also be added to the raw material for preparing the packaging bag according to needs, such as a colorant, etc.

Preferably, a heat sealing strength of the packaging bag is ≥ 15 N/15 mm, further preferably ≥ 17.5 N/15 mm, and particularly preferably ≥ 21 N/15 mm.

In the present invention, the heat sealing strength of the packaging bag is obtained by testing the packaging bag obtained from the aliphatic polyester at a film blowing processing temperature set at 140°C, stood and adjusted for 24 h under conditions of 25±5°C and a humidity of 55±5%, according to the standard QB/T 2358-1998; and specifically, a heat sealing process includes: a heat sealing temperature of 100-130°C, a heat sealing time of 1-5 s, and a heat sealing pressure of 200-400 KPa.

In the present invention, the packaging bag includes a shopping bag, a courier bag, a fruit and vegetable bag, etc.

The aliphatic polyester, the polyester composition, and a packaging film prepared therefrom in the present invention are all biodegradable.

For the present invention, if a substance or a substance mixture shows, as defined in DIN EN 13432, a biodegradation percentage degree of at least 90%, the substance or the substance mixture has the characteristic of "biodegradability".

According to DIN EN 13432, during composting, air free of CO₂ is introduced into mature compost, and the compost is allowed to undergo a specific temperature process. Herein, the biodegradability is defined as a biodegradation percentage degree represented by a ratio of a net amount of CO₂ released by a sample (after subtracting an amount of CO₂ released by compost without the sample) to a maximum amount of CO₂ that can be released by the sample (calculated based on a carbon content in the sample). After the composting for only a few days, the biodegradable polyester and the biodegradable polyester composition usually show obvious signs of degradation, such as fungal growth, cracking, and perforation, etc.

Other methods for determining the biodegradability are also described in ASTM D5338 and ASTM D6400.

The numerical ranges in the present invention include not only the above-mentioned enumerated point values but also any point values within the above-mentioned numerical ranges that are not enumerated, and due to space limitations and for the sake of simplicity, all specific point values included within the ranges are not exhaustively enumerated in the present invention.

Compared with the prior art, the present invention has the following beneficial effects.

According to the aliphatic polyester provided by the present invention, by controlling the molar contents of the succinic acid residue and the sebacic acid residue within specific ranges, introducing the branching agent residue, and controlling the content of the branching agent residue within a specific range, the heat sealing strength of the aliphatic polyester can be improved; and as a result, the packaging bag prepared from the aliphatic polyester also has high heat sealing strength, thereby avoiding the problem of edge bursting or bottom puncturing of the packaging bag, and improving production efficiency.

### DETAILED DESCRIPTION OF EMBODIMENTS

The technical solutions of the present invention are further described below through specific embodiments. Those skilled in the art should understand that examples described are merely to facilitate an understanding of the present invention and should not be regarded as specific limitations to the present invention.

In the present invention, all materials used can be purchased commercially or prepared by conventional methods; and unless otherwise specified, the materials used in the present invention are as follows:
1,4-butanediol: purchased from Xinjiang Markorchem Co., Ltd.;
succinic acid: purchased from Shandong Landian Biotechnology Co., Ltd.;
sebacic acid: purchased from Hengshui Jinghua Chemical Co., Ltd.;
glycerol, pentaerythritol, and tartaric acid: all purchased from Aladdin; and tetrabutyl titanate: purchased from Jianyi Chemical Import and Export Co., Ltd.

In the present invention, test methods for a molecular weight distribution coefficient, a melt flow rate, a carboxyl content, molar percentage contents of a succinic acid residue and a sebacic acid residue in an aliphatic polyester, and a mass percentage content of a branching agent residue are as follows.
1. Molecular weight distribution coefficient: The test is conducted using a gel permeation chromatograph (GPC) and specifically includes: using a chromatographic system for determination at 40°C, with a set of three tandem columns (with a particle diameter of 5 µm and porosities of 500 Å, 1,000 Å, and 10,000 Å, respectively) and a refractive index detector, chloroform as an eluent (at an elution flow rate of 1 mL/min), and polystyrene as a reference standard to obtain Mw and Mn, with molecular weight distribution coefficient = Mw/Mn, where an instrument model is: Waters 1515GPC, and a method for preparing a sample includes: directly dissolving the aliphatic polyester in chromatographic-grade tetrahydrofuran (THF) to formulate a 1 mg/mL solution for testing.
2. Melt flow rate: The test is conducted according to the standard ISO 1133-2-2012 under test conditions of 190°C and 2.16 kg.
3. Carboxyl content: The test is conducted according to the standard GB/T 32366-2015 and is specifically as follows: dissolving 1 g of the sample in 50 mL of a mixed solvent of phenol and trichloromethane in a volume ratio of 2:3; using a solution of potassium hydroxide in ethanol with a concentration of 0.01 mol/L as a standard titration solution and a bromophenol blue solution with a concentration of 0.2% as an indicator; conducting a blank test according to a method for testing the carboxyl content of the above test sample; and testing the sample in parallel twice, where a difference value between two test results is required to be less than or equal to 2 mol/t, and a final result is an average value of the two test results.
4. Molar percentage content: The test is conducted by a ¹HNMR method and specifically includes: weighing and dissolving 20 mg of the aliphatic polyester sample in 0.6 mL of deuterated chloroform, and then measuring its ¹HNMR at room temperature using a Bruker AV 500 nuclear magnetic resonance spectrometer; and performing integration on characteristic chemical shift peaks of the succinic acid residue and the sebacic acid residue (a characteristic chemical shift of the succinic acid residue is about 2.63 ppm, representing 4 hydrogens on two methylene groups -CH₂-CH₂- in succinic acid; and a characteristic chemical shift of the sebacic acid residue is about 1.30 ppm, representing 8 hydrogens on four methylene groups -CH₂-CH₂-CH₂-CH₂- in the middle of sebacic acid), and obtaining respective molar percentage contents of the succinic acid residue and the sebacic acid residue in the aliphatic polyester according to proportions of peak areas based on a total molar percentage content of the succinic acid residue and the sebacic acid residue as 100 mol%. For example, when an integral area of the succinic acid residue is I1 and an integral area of the sebacic acid residue is I2, the molar percentage content of the succinic acid residue in the aliphatic polyester is I1/(I1+I2)×100% based on the total molar percentage content of the succinic acid residue and the sebacic acid residue as 100 mol%.
5. Mass percentage content of the branching agent residue in the aliphatic polyester: The test is conducted by an LC-MS method and is specifically as follows: weighing and adding 0.5-1.5 g of the sample into a three-necked flask, adding 30 mL of a 1 mol/L solution of potassium hydroxide in ethanol for alkaline hydrolysis under a reflux condition until complete alkaline hydrolysis of the aliphatic polyester, performing cooling, then performing vacuum filtration, adjusting a part of a filtrate to neutral with concentrated hydrochloric acid, drying with anhydrous sodium sulfate, filtering again, and subjecting the filtrate to qualitative and quantitative analysis of the branching agent residue by LC-MS.

### Examples 1-17 and Comparative Examples 1-5

Examples 1-17 and Comparative Examples 1-5 respectively provide an aliphatic polyester, with the composition of a dicarboxylic acid residue and the specific type and content of a branching agent residue of the aliphatic polyester shown in Table 1, where the content of the branching agent residue is calculated based on the mass of the aliphatic polyester as 100 wt%, and a molecular weight distribution coefficient, a melt flow rate, and a carboxyl content of the aliphatic polyester are shown in Table 1.

Methods for preparing the aliphatic polyesters provided in Examples 1-17 and Comparative Examples 1-5 are as follows.

### Example 1

A method for preparing the aliphatic polyester is provided, which specifically includes the following steps:
(1) physically mixing 30.3 kg of succinic acid, 6.9 kg of sebacic acid, 35 kg of 1,4-butanediol, and 78 g of glycerol, and after the mixing is completed, transferring the mixture into a 200 L esterification reactor to carry out an esterification reaction under conditions of a temperature of 190°C and a pressure of 1.1 bar for 5 h to obtain an esterification product;
(2) transferring the esterification product obtained in the step (1) into a vertical reactor with a stirrer, adding 24 g of tetrabutyl titanate, and carrying out a pre-polymerization reaction under conditions of a temperature of 243°C and a pressure of 0.60 bar for 80 min to obtain a pre-polymerization product; and
(3) transferring the pre-polymerization product obtained in the step (2) into a horizontal reactor with a stirrer to carry out a polycondensation reaction under conditions of a temperature of 245°C and a pressure of 1.2 mbar for 110 min to obtain the aliphatic polyester.

### Example 2

A method for preparing the aliphatic polyester is provided, which specifically includes the following steps:
(1) physically mixing 25.8 kg of succinic acid, 11.4 kg of sebacic acid, 35 kg of 1,4-butanediol, and 78 g of glycerol, and after the mixing is completed, transferring the mixture into a 200 L esterification reactor to carry out an esterification reaction under conditions of a temperature of 190°C and a pressure of 1.0 bar for 5 h to obtain an esterification product;
(2) transferring the esterification product obtained in the step (1) into a vertical reactor with a stirrer, adding 26 g of tetrabutyl titanate, and carrying out a pre-polymerization reaction under conditions of a temperature of 242°C and a pressure of 0.45 bar for 95 min to obtain a pre-polymerization product; and
(3) transferring the pre-polymerization product obtained in the step (2) into a horizontal reactor with a stirrer to carry out a polycondensation reaction under conditions of a temperature of 243°C and a pressure of 1.0 mbar for 95 min to obtain the aliphatic polyester.

### Example 3

A method for preparing the aliphatic polyester is provided, which specifically includes the following steps:
(1) physically mixing 23.6 kg of succinic acid, 13.6 kg of sebacic acid, 35 kg of 1,4-butanediol, and 80 g of glycerol, and after the mixing is completed, transferring the mixture into a 200 L esterification reactor to carry out an esterification reaction under conditions of a temperature of 180°C and a pressure of 0.8 bar for 4 h to obtain an esterification product;
(2) transferring the esterification product obtained in the step (1) into a vertical reactor with a stirrer, adding 27 g of tetrabutyl titanate, and carrying out a pre-polymerization reaction under conditions of a temperature of 244°C and a pressure of 0.52 bar for 90 min to obtain a pre-polymerization product; and
(3) transferring the pre-polymerization product obtained in the step (2) into a horizontal reactor with a stirrer to carry out a polycondensation reaction under conditions of a temperature of 245°C and a pressure of 1.1 mbar for 100 min to obtain the aliphatic polyester.

### Example 4

A method for preparing the aliphatic polyester is provided, which specifically includes the following steps:
(1) physically mixing 22.5 kg of succinic acid, 14.7 kg of sebacic acid, 35 kg of 1,4-butanediol, and 76 g of glycerol, and after the mixing is completed, transferring the mixture into a 200 L esterification reactor to carry out an esterification reaction under conditions of a temperature of 180°C and a pressure of 1.0 bar for 4 h to obtain an esterification product;
(2) transferring the esterification product obtained in the step (1) into a vertical reactor with a stirrer, adding 24 g of tetrabutyl titanate, and carrying out a pre-polymerization reaction under conditions of a temperature of 241°C and a pressure of 0.70 bar for 90 min to obtain a pre-polymerization product; and
(3) transferring the pre-polymerization product obtained in the step (2) into a horizontal reactor with a stirrer to carry out a polycondensation reaction under conditions of a temperature of 243°C and a pressure of 1.1 mbar for 100 min to obtain the aliphatic polyester.

### Examples 5-10

A method for preparing the aliphatic polyester is respectively provided, which is different from Example 3 in that the content and type of the branching agent are different, where in the preparation method of Examples 5-10, the addition mass of the branching agent is sequentially 68.0 g, 85.0 g, 55.0 g, 110.0 g, 80.0 g, and 80.0 g. Other raw materials, use amounts, and preparation methods are all the same as those in Example 3.

### Example 11

A method for preparing the aliphatic polyester is provided, which is different from Example 3 in that step (1) includes the following steps:
(1-1) physically mixing 23.6 kg of succinic acid with 25 kg of 1,4-butanediol and 80 g of glycerol, and after the mixing is completed, transferring the mixture into an esterification reactor to carry out an esterification reaction under conditions of a temperature of 160°C and a pressure of 1.0 bar for 4 h to obtain an esterification product A; and
(1-2) physically mixing 13.6 kg of sebacic acid with 10 kg of 1,4-butanediol, and after the mixing is completed, transferring the mixture into an esterification reactor to carry out an esterification reaction under conditions of a temperature of 200°C and a pressure of 0.9 bar for 4 h to obtain an esterification product B. After the esterification product A and the esterification product B are mixed, steps (2) and (3) are carried out. Other raw materials, steps, and preparation methods are all the same as those in Example 3.

### Example 12

A method for preparing the aliphatic polyester is provided, which is different from Example 11 as follows:
(1-1) physically mixing 23.6 kg of succinic acid with 25 kg of 1,4-butanediol and 80 g of glycerol, and after the mixing is completed, transferring the mixture into an esterification reactor to carry out an esterification reaction under conditions of a temperature of 180°C and a pressure of 1.0 bar for 5 h to obtain an esterification product A;
(1-2) physically mixing 13.6 kg of sebacic acid with 10 kg of 1,4-butanediol, and after the mixing is completed, transferring the mixture into an esterification reactor to carry out an esterification reaction under conditions of a temperature of 210°C and a pressure of 1.0 bar for 4 h to obtain an esterification product B;
(2) transferring the esterification product A obtained in the step (1-1) and the esterification product B obtained in the step (1-2) into a vertical reactor with a stirrer, adding 27 g of tetrabutyl titanate, and carrying out a pre-polymerization reaction under conditions of a temperature of 240°C and a pressure of 0.65 bar for 85 min to obtain a pre-polymerization product;
(3) transferring the pre-polymerization product obtained in the step (2) into a horizontal reactor with a stirrer to carry out a polycondensation reaction under conditions of a temperature of 242°C and a pressure of 1.4 mbar for 50 min to obtain a polycondensation product; and
(4) extruding the polycondensation product obtained in the step (3) with hexamethylene diisocyanate (at a content of 0.28 wt% of the mass of the polycondensation product) in a reactive extruder at a temperature of 210°C for a residence time of 8 min to obtain the aliphatic polyester.

### Example 13

A method for preparing the aliphatic polyester is provided, which is different from Example 11 as follows:
(1-1) physically mixing 23.6 kg of succinic acid with 25 kg of 1,4-butanediol and 32 g of glycerol, and after the mixing is completed, transferring the mixture into an esterification reactor to carry out an esterification reaction under conditions of a temperature of 170°C and a pressure of 1.0 bar for 3 h to obtain an esterification product A; and
(1-2) physically mixing 13.6 kg of sebacic acid with 10 kg of 1,4-butanediol and 48 g of glycerol, and after the mixing is completed, transferring the mixture into an esterification reactor to carry out an esterification reaction under conditions of a temperature of 190°C and a pressure of 1.0 bar for 3 h to obtain an esterification product B. After the esterification product A and the esterification product B are mixed, steps (2) and (3) are carried out. Other raw materials, steps, and preparation methods are all the same as those in Example 11.

### Example 14

A method for preparing the aliphatic polyester is provided, which is different from Example 3 in that in step (3), a pre-polymerization product obtained in step (2) is transferred into a horizontal reactor with a stirrer to carry out a polycondensation reaction under conditions of a temperature of 248°C and a pressure of 1.1 mbar for 110 min to obtain the aliphatic polyester. Other raw materials, use amounts, and preparation methods are all the same as those in Example 3.

### Example 15

A method for preparing the aliphatic polyester is provided, which is different from Example 3 in that in step (3), a pre-polymerization product obtained in step (2) is transferred into a horizontal reactor with a stirrer to carry out a polycondensation reaction under conditions of a temperature of 245°C and a pressure of 1.3 mbar for 58 min to obtain the aliphatic polyester. Other raw materials, use amounts, and preparation methods are all the same as those in Example 3.

### Example 16

A method for preparing the aliphatic polyester is provided, which is different from Example 3 in that in step (3), a pre-polymerization product obtained in step (2) is transferred into a horizontal reactor with a stirrer to carry out a polycondensation reaction under conditions of a temperature of 240°C and a pressure of 1.4 mbar for 45 min to obtain a polycondensation product, and
in step (4), after the polycondensation reaction, the method further includes extruding the obtained polycondensation product with hexamethylene diisocyanate (at a content of 0.34 wt% of the mass of the polycondensation product) in a reactive extruder at a temperature of 200°C for a residence time of 10 min to obtain the aliphatic polyester. Other raw materials, use amounts, and preparation methods are all the same as those in Example 3.

### Example 17

A method for preparing the aliphatic polyester is provided, which is different from Example 3 in that in step (3), a pre-polymerization product obtained in step (2) is transferred into a horizontal reactor with a stirrer to carry out a polycondensation reaction under conditions of a temperature of 242°C and a pressure of 1.4 mbar for 50 min to obtain a polycondensation product, and
in step (4), after the polycondensation reaction, the method further includes extruding the obtained polycondensation product with hexamethylene diisocyanate (at a content of 0.36 wt% of the mass of the polycondensation product) in a reactive extruder at a temperature of 210°C for a residence time of 7 min to obtain the aliphatic polyester. Other raw materials, use amounts, and preparation methods are all the same as those in Example 3.

### Comparative Example 1

A method for preparing the aliphatic polyester is provided, which specifically includes the following steps:
(1) physically mixing 32 kg of succinic acid, 5.2 kg of sebacic acid, 35 kg of 1,4-butanediol, and 80 g of glycerol, and after the mixing is completed, transferring the mixture into a 200 L esterification reactor to carry out an esterification reaction under conditions of a temperature of 190°C and a pressure of 1.1 bar for 5 h to obtain an esterification product;
(2) transferring the esterification product obtained in the step (1) into a vertical reactor with a stirrer, adding 27 g of tetrabutyl titanate, and carrying out a pre-polymerization reaction under conditions of a temperature of 243°C and a pressure of 0.60 bar for 110 min to obtain a pre-polymerization product; and
(3) transferring the pre-polymerization product obtained in the step (2) into a horizontal reactor with a stirrer to carry out a polycondensation reaction under conditions of a temperature of 245°C and a pressure of 1.2 mbar for 100 min to obtain the aliphatic polyester.

### Comparative Example 2

A method for preparing the aliphatic polyester is provided, which specifically includes the following steps:
(1) physically mixing 20.9 kg of succinic acid, 16.3 kg of sebacic acid, 35 kg of 1,4-butanediol, and 80 g of glycerol, and after the mixing is completed, transferring the mixture into a 200 L esterification reactor to carry out an esterification reaction under conditions of a temperature of 180°C and a pressure of 1.0 bar for 4 h to obtain an esterification product;
(2) transferring the esterification product obtained in the step (1) into a vertical reactor with a stirrer, adding 27 g of tetrabutyl titanate, and carrying out a pre-polymerization reaction under conditions of a temperature of 241°C and a pressure of 0.70 bar for 90 min to obtain a pre-polymerization product; and
(3) transferring the pre-polymerization product obtained in the step (2) into a horizontal reactor with a stirrer to carry out a polycondensation reaction under conditions of a temperature of 245°C and a pressure of 1.2 mbar for 100 min to obtain the aliphatic polyester.

### Comparative Example 3

A method for preparing the aliphatic polyester is provided, which specifically includes the following steps:
(1) physically mixing 23.6 kg of succinic acid, 13.6 kg of sebacic acid, 35 kg of 1,4-butanediol, and 147 g of glycerol, and after the mixing is completed, transferring the mixture into a 200 L esterification reactor to carry out an esterification reaction under conditions of a temperature of 190°C and a pressure of 1.1 bar for 5 h to obtain an esterification product;
(2) transferring the esterification product obtained in the step (1) into a vertical reactor with a stirrer, adding 24 g of tetrabutyl titanate, and carrying out a pre-polymerization reaction under conditions of a temperature of 240°C and a pressure of 0.50 bar for 100 min to obtain a pre-polymerization product; and
(3) transferring the pre-polymerization product obtained in the step (2) into a horizontal reactor with a stirrer to carry out a polycondensation reaction under conditions of a temperature of 242°C and a pressure of 1.4 mbar for 90 min to obtain the aliphatic polyester.

### Comparative Example 4

A method for preparing the aliphatic polyester is provided, which is only different from Example 3 in that the content of the glycerol is different. Other raw materials, use amounts, and preparation methods are all the same as those in Example 3.

### Comparative Example 5

A method for preparing the aliphatic polyester is provided, which is only different from Example 3 in that the glycerol is not used. Other raw materials, use amounts, and preparation methods are all the same as those in Example 3.

**Table 1**

| | Succinic acid residue content (mol%) | Sebacic acid residue content (mol%) | Branchi ng agent type | Branchi ng agent content (wt%) | Molecul ar weight distribut ion coefficie nt | Melt flow rate (g/10 min) | Carbo xyl conte nt (mol/t ) |
|---|---|---|---|---|---|---|---|
| Exampl e 1 | 88.3 | 11.7 | Glycerol | 0.145 | 1.56 | 3.0 | 27.3 |
| Exampl e2 | 79.5 | 20.5 | Glycerol | 0.148 | 2.11 | 3.4 | 18.4 |
| Exampl e 3 | 74.8 | 25.2 | Glycerol | 0.152 | 2.05 | 3.6 | 18.7 |
| Exampl e 4 | 72.4 | 27.6 | Glycerol | 0.145 | 2.47 | 4.2 | 26.2 |
| Exampl e 5 | 74.9 | 25.1 | Glycerol | 0.130 | 1.94 | 3.5 | 19.2 |
| Exampl e 6 | 74.7 | 25.3 | Glycerol | 0.160 | 2.14 | 3.6 | 20.4 |
| Exampl e 7 | 74.8 | 25.2 | Glycerol | 0.100 | 1.68 | 2.8 | 21.1 |
| Exampl e 8 | 74.6 | 25.4 | Glycerol | 0.210 | 2.36 | 4.2 | 21.7 |
| Exampl e 9 | 74.8 | 25.2 | Pentaery thritol | 0.150 | 1.98 | 3.5 | 18.4 |
| Exampl e 10 | 74.7 | 25.3 | Tartaric acid | 0.153 | 1.96 | 3.5 | 19.0 |
| Exampl e 11 | 74.9 | 25.1 | Glycerol | 0.150 | 2.05 | 3.4 | 18.1 |
| Exampl e 12 | 74.7 | 25.3 | Glycerol | 0.150 | 1.45 | 3.1 | 18.2 |
| Exampl e 13 | 74.6 | 25.4 | Glycerol | 0.151 | 2.60 | 4.2 | 25.8 |
| Exampl e 14 | 74.8 | 25.2 | Glycerol | 0.152 | 1.52 | 2.0 | 20.2 |
| Exampl e 15 | 74.9 | 25.1 | Glycerol | 0.152 | 2.48 | 7.5 | 21.4 |
| Exampl e 16 | 74.8 | 25.2 | Glycerol | 0.152 | 2.01 | 2.6 | 10.2 |
| Exampl e 17 | 74.0 | 25.0 | Glycerol | 0.151 | 2.12 | 2.4 | 11.2 |
| Compar ative Exampl e 1 | 91 | 9 | Glycerol | 0.148 | 1.45 | 2.8 | 19.4 |
| Compar ative Exampl e 2 | 68.5 | 31.5 | Glycerol | 0.153 | 2.53 | 3.2 | 19.7 |
| Compar ative Exampl e 3 | 74.9 | 25.1 | Glycerol | 0.277 | 2.88 | 3.8 | 19.3 |
| Compar ative Exampl e 4 | 74.8 | 25.2 | Glycerol | 0.050 | 1.24 | 3.7 | 26.4 |
| Compar ative Exampl e 5 | 74.8 | 25.2 | None | 0.000 | 1.18 | 4.1 | 35.6 |

### Application Examples 1-17 and Comparative Application Examples 1-5

Application Examples 1-17 and Comparative Application Examples 1-5 respectively provide a polyester composition. In parts by weight, the polyester composition includes 63 parts of an aliphatic polyester, 4 parts of polylactic acid, 25 parts of starch, 4 parts of glycerol, 3 parts of water, and 1 part of other auxiliary agents (including 0.5 part of a compound antioxidant composed of antioxidant 1010 and antioxidant 168 in a mass ratio of 1:1, and 0.5 part of a lubricant (ethylene bis-stearamide)). The aliphatic polyester is respectively provided by Examples 1-17 and Comparative Examples 1-5. A method for preparing the polyester composition includes: mixing various components according to formulation amounts, and adding the same into a twin-screw extruder (with an aspect ratio of 48:1 and a diameter of 40 mm) for melt mixing and extrusion granulation at extrusion temperatures sequentially as follows: 120°C in zone 1, 160°C in zone 2, 180°C in zones 3 to 9, 170°C in zone 10, and 170°C in zone 11, at a die head temperature of 190°C, a screw rotation speed of 380 rpm, and a vacuum degree of -0.60 kg/cm², to obtain the polyester composition, where the starch is purchased from Shandong Shouguang Juneng Golden Corn Development Co., Ltd.; and the polylactic acid, PLA, KB600 NF30, is derived from Zhuhai Jinfa Biomaterials Co., Ltd.

### Performance testing

Polyester compositions respectively including the aliphatic polyesters provided by Examples 1-17 and Comparative Examples 1-5 were subjected to film blowing processing under the following conditions to obtain packaging bags; and the heat sealing strength of the packaging bags was tested, where a heat sealing process included: a heat sealing temperature of 115°C, a heat sealing time of 3 s, and a heat sealing pressure of 300 KPa.

A screw aspect ratio was 32:1, a spiral flow channel type die head was used, an air ring was a double-port air ring, a film blowing processing temperature was set at 140°C, a blow-up ratio was 3.5, and a film blowing thickness was 25±2 µm.

A heat sealing strength test was conducted by standing and adjusting under conditions of 25±5°C and a humidity of 55±5% for 24 h according to the standard QB/T 2358-1998.

Specific test results are shown in Table 2.

**Table 2**

| | Sample thickness (µm) | Heat sealing strength (N/15 mm) |
|---|---|---|
| Application Example 1 | 25.4 | 15.6 |
| Application Example 2 | 25.3 | 18.5 |
| Application Example 3 | 25.6 | 18.2 |
| Application Example 4 | 25.3 | 16.2 |
| Application Example 5 | 25.1 | 17.7 |
| Application Example 6 | 25.8 | 17.5 |
| Application Example 7 | 24.9 | 16.6 |
| Application Example 8 | 25.5 | 16.3 |
| Application Example 9 | 25.5 | 18.0 |
| Application Example 10 | 25.8 | 17.9 |
| Application Example 11 | 25.5 | 18.3 |
| Application Example 12 | 24.7 | 15.3 |
| Application Example 13 | 25.2 | 15.9 |
| Application Example 14 | 25.7 | 16.4 |
| Application Example 15 | 25.5 | 16.7 |
| Application Example 16 | 24.8 | 21.7 |
| Application Example 17 | 25.2 | 22.4 |
| Comparative Application Example 1 | 25.4 | 11.4 |
| Comparative Application Example 2 | 25.4 | 14.6 |
| Comparative Application Example 3 | 25.9 | 13.7 |
| Comparative Application Example 4 | 25.2 | 13.5 |
| Comparative Application Example 5 | 25.5 | 12.6 |

It can be shown from Table 2 that for the biodegradable aliphatic polyester of the present invention, by regulating the composition ratio of the succinic acid residue to the sebacic acid residue in the biodegradable polyester, poly(butylene succinate-co-sebacate), and meanwhile introducing the branching agent residue and regulating the content of the branching agent residue within a specific range, the heat sealing strength of the packaging bag including the biodegradable polyester is significantly improved, and the heat sealing strength of the obtained packaging bag is ≥ 15 N/15 mm.

The specific examples described above are to further describe the objectives, technical solutions, and beneficial effects of the present invention in detail. It should be understood that the above descriptions are only specific examples of the present invention and are not intended to limit the present invention, and any modifications, equivalent substitutions, improvements, and the like made within the spirit and principles of the present invention should all be included within the scope of protection of the present invention.

## Claims

1. An aliphatic polyester, comprising a dicarboxylic acid residue, a diol residue, and a branching agent residue, wherein
the dicarboxylic acid residue comprises the following residues:
a1) based on a total molar percentage content of a1) and a2) as 100 mol%, 71-89 mol% of a succinic acid residue; and
a2) based on the total molar percentage content of a1) and a2) as 100 mol%, 11-29 mol% of a sebacic acid residue;
the diol residue is selected from a 1,4-butanediol residue with a molar content at least equal to that of the dicarboxylic acid residue;
the branching agent residue is derived from a branching agent with a degree of functionality ≥ 3; and
based on a total mass of the aliphatic polyester as 100 wt%, a mass percentage content of the branching agent residue is 0.09-0.22 wt%.

2. The aliphatic polyester according to claim 1, wherein the dicarboxylic acid residue comprises the following residues:
a1) based on the total molar percentage content of a1) and a2) as 100 mol%, 74-83 mol% of the succinic acid residue; and
a2) based on the total molar percentage content of a1) and a2) as 100 mol%, 17-26 mol% of the sebacic acid residue.

3. The aliphatic polyester according to claim 1 or 2, wherein based on the total mass of the aliphatic polyester as 100 wt%, the mass percentage content of the branching agent residue is 0.11-0.17 wt%.

4. The aliphatic polyester according to any one of claims 1-3, wherein a molecular structure of the branching agent comprises at least one of a hydroxyl group, a carboxyl group, or an acid anhydride;
preferably, the branching agent comprises at least one of a polyol, a polyacid, a polyol acid, or a polyacid anhydride, further preferably a polyol;
preferably, the polyol comprises at least one of trimethylolpropane, trimethylolethane, pentaerythritol, polyether triol, or glycerol;
preferably, the polyacid comprises at least one of 1,3,5-benzenetricarboxylic acid, 1,2,4-benzenetricarboxylic acid, or 1,2,4,5-benzenetetracarboxylic acid;
preferably, the polyol acid comprises at least one of tartaric acid, citric acid, or malic acid; and
preferably, the polyacid anhydride comprises 1,2,4-benzenetricarboxylic anhydride and/or pyromellitic dianhydride.

5. The aliphatic polyester according to any one of claims 1-4, wherein a molecular weight distribution coefficient of the aliphatic polyester is 1.3-2.8, preferably 1.5-2.5;
preferably, under conditions of 190°C and 2.16 kg, a melt flow rate of the aliphatic polyester is 1.2-10 g/10 min, further preferably 2.2-6 g/10 min; and
preferably, a carboxyl content of the aliphatic polyester is < 50 mol/t.

6. A polyester composition, comprising the aliphatic polyester according to any one of claims 1-5.

7. The polyester composition according to claim 6, further comprising at least one of a second polymer, a filler, or an auxiliary agent, wherein
preferably, the second polymer comprises at least one of polylactic acid, polycaprolactone, a polyhydroxyalkanoate, an aliphatic polycarbonate, or an aliphatic-aromatic polyester; and
preferably, the filler comprises an inorganic filler and/or an organic filler.

8. The polyester composition according to claim 6 or 7, comprising, in parts by weight, 50-70 parts of the aliphatic polyester, 4-20 parts of the second polymer, 15-35 parts of the filler, and 0-15 parts of the auxiliary agent.

9. A packaging bag, wherein a raw material for preparing the packaging bag comprises the aliphatic polyester according to any one of claims 1-5 or the polyester composition according to any one of claims 6-8.

10. The packaging bag according to claim 9, wherein a heat sealing strength of the packaging bag is ≥ 15 N/15 mm.
